# EUROPEAN PATENT SPECIFICATION

(11) **EP 4 506 626 B1**
(45) Date of publication and mention of the grant of the patent: **21.01.2026**
(21) Application number: 24190620.5
(22) Date of filing: 24.07.2024
(51) Int. Cl.: F24D 19/08, F24F 11/36, F24H 15/12, B01D 19/00, F16K 24/04

(54) **DEGASSING DEVICE**
ENTGASUNGSVORRICHTUNG
DISPOSITIF DE DÉGAZAGE

(30) Priority: 07.08.2023 SK 1352023
(43) Date of publication of application: 12.02.2025
(73) Proprietor: Vaillant GmbH, 42859 Remscheid NRW (DE); Protherm Production s.r.o., 909 01 Skalica (SK)
(72) Inventor: Masik, Marian, 90863 Lopasov (SK)
(74) Representative: Popp, Carsten

(56) References cited:
- EP-A1- 1 562 001
- EP-A1- 4 047 288
- EP-B1- 0 363 586
- DE-A1- 102020 103 743
- DE-A1- 102022 119 835

## Description

### Field of the invention

The invention relates to a degassing device for separating gas bubbles from liquid, particularly from heat transfer liquid in a heating and/or cooling system with a heat pump.

### Background of the invention

The degassing process in heating systems was originally developed to separate air or its components. Air that has infiltrated the closed heat transfer liquid circuit due to leakage or malfunction is an undesirable element and must therefore be removed from the heat transfer liquid circuit.

The simplest separator of air from liquid is, for example, a float-type vent valve for releasing air, which is usually located at the highest geographical point of the heating system.

Another commonly used degassing device includes a liquid inlet, a liquid outlet, a collection chamber, and a liquid flow path extending from the liquid inlet through the collection chamber to the liquid outlet. Such a degassing device often includes a float-type vent valve as a component.

Another known type of a separator is a device for degassing micro-bubbles, which typically includes at least one separating element in the collection chamber. The separating element can be a wall, a metal grid, a tube, or another suitable component designed to create, grow, and separate gas bubbles from the flow of the heat transfer liquid.

When the liquid flow encounters the separating element after the liquid inlet, the flow slows down in the chamber, allowing gas bubbles to separate from the stream, aggregate at the bottom of the chamber, forming large bubbles that rise upwards.

Once they reach the top of the vent valve, the aggregated bubbles press against the float of the vent valve, and the accumulated gas is expelled.

This type of a degassing device is highly effective in removing dissolved gas from heat transfer liquid in a closed circuit. For effective separation of gas from liquid, the volume of the collection chamber needs to be relatively large.

A compression refrigeration machine is the basis of a heating and/or cooling system with a heat pump for heating and/or cooling spaces and preparing hot water. This machine generates heat to warm heating water from the heat extracted from the external environment, while the working fluid of the compression machine circulates as a refrigerant in a counterclockwise thermodynamic cycle.

A standard electric backup heater is currently used for degassing heat transfer liquid in such devices, which includes a collection chamber function. In the upper part an air vent valve is connected to it via a special brass connection.

For environmental reasons, newer heat pumps no longer use safety refrigerants, they use flammable natural working fluids such as R290 and R1270, or other common, flammable refrigerants such as R32.

Depending on the circuit and operating mode, leaks in the condenser or evaporator can lead to leakage of gaseous, flammable working fluid from the refrigerant circuit into the heat transfer liquid circuit (it is called also secondary heat pump circuit).

In the prior state of the art, this is prevented by using double-walled heat exchangers made of stainless steel as condensers and evaporators.

In the event of a leak, the flammable working fluid enters the space between the two walls, where it is separately extracted and subjected to additional treatment. This additional treatment can also be omitted if there is a safe path to the atmosphere, where it mixes with the air to such an extent that an ignitable mixture cannot form. The gap is usually only a few tenths of a millimeter. However, these types of constructions are expensive on one hand and impede heat transfer on the other, as the interspace acts as thermal insulation, thereby reducing achievable efficiency. Moreover, leaks can also affect both walls, including the outer one.

For these reasons, single-walled heat exchangers (condenser, evaporator) are used again, and effective solutions for degassing heating circuits are implemented.

To prevent dangerous concentrations of flammable refrigerant in a building, it is essential to use a suitable degassing device in the heating system; the currently used standard solution of a vent valve connected to an electric water heater cannot be used.

The process of degassing microbubbles can also be used to separate flammable refrigerants that may have leaked from the refrigerant circuit into the heat transfer medium in heat pump systems in the event of a malfunction, provided that the associated ventilation piping does not lead into the interior of the building, but to the external environment.

As already mentioned, for effective separation of gas from liquid, the volume of the collection chamber needs to be relatively large. It is therefore advantageous to include, where possible, additional functions in the degassing device that would otherwise have to be implemented elsewhere in the heating and/or cooling system.

The document DE 10 2020 103743 A1 discloses a degassing device according to the preamble of claim 1. Each of the documents DE 10 2022 119835 A1, EP 4 047 288 A1, EP 1 562 001 A1 and EP 0 363 586 B1 discloses alternative examples of degassing devices.

The presented invention describes a compact degassing device, suitable for degassing flammable refrigerants from heat transfer liquid, integrating several functions.

### Summary of the invention

The degassing device designed for heating and/or cooling systems with a heat pump to separate bubbles of flammable gaseous refrigerant from heat transfer liquid consists of an upper and lower module, watertight connected together.

The upper module is equipped with a connection for heat transfer liquid inlet, and a vent valve is arranged at its geometrically highest point.

The lower module is equipped with a connection for heat transfer liquid outlet, with water or a mixture of water with glycol used as heat transfer liquid.

The connection of the upper and lower modules is provided to form a collection chamber for the liquid.

Inside the upper module, a fixed separating wall is arranged.

The separating wall is arranged in the path of the liquid flow, causing the liquid flow to hit the separating wall after the liquid enters. In the collection chamber, the flow slows down, allowing gas bubbles to separate from the stream, aggregating at the bottom of the chamber to form large bubbles that rise upwards. Once they reach the float of the air vent valve, the aggregated bubbles press against the float, causing the accumulated gas to be expelled.

The lower module forms a larger volume of the collection chamber, making it possible to arrange connections on its walls for some functional devices, which is particularly advantageous for service purposes and/or device monitoring.

Advantageously arranged on the lower module, there is a connection especially for a pressure sensor, temperature sensor, service pressure gauge, safety pressure relief valve, and drain valve.

There is a drain valve advantageously arranged on the degassing device, as in the event of refrigerant leakage, it is often necessary to flush the system in order to remove any remnants of leaked refrigerant.

There is a service pressure gauge advantageously arranged on the degassing device, providing quick access to pressure information during visual inspection of the heating device.

The degassing device can be connected to the heat transfer medium piping either in the outdoor unit or in the indoor unit of the heat pump and secured using a fixing bracket.

For safety when using flammable working fluids, the degassing device is most commonly located in the outdoor unit, and in this case, the drain valve can be designed as an anti-freeze valve, with freeze protection.

The described design solution of the degassing device allows for the integration of additional functions necessary for the operation of the heating device while maximizing the use of space. Functions that would otherwise have to be implemented elsewhere in the heating device are integrated in one device.

### Brief description of drawings

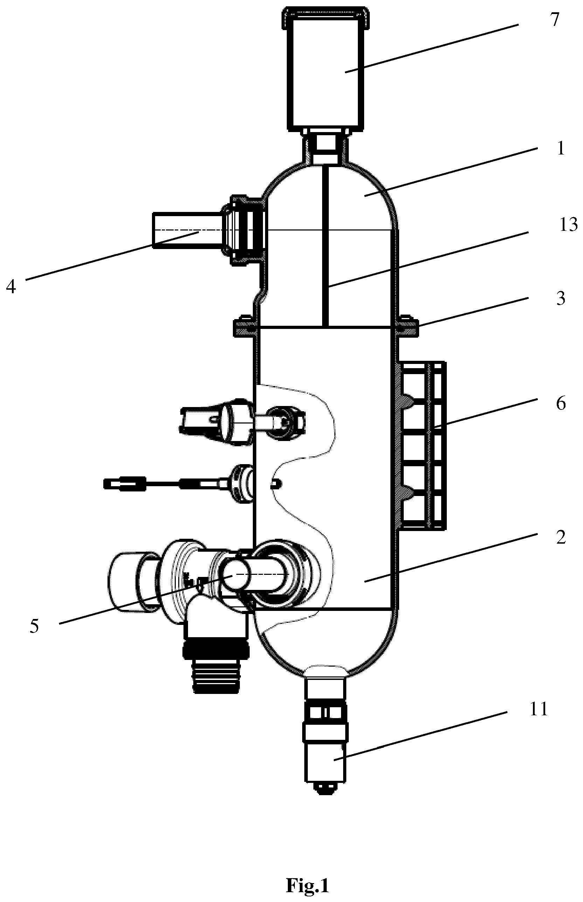

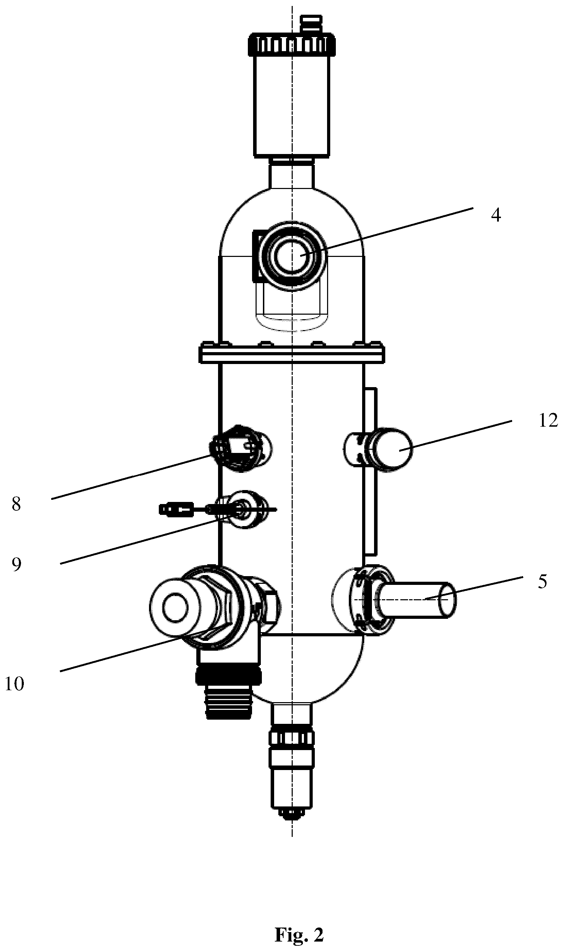

Fig. 1 and Fig. 2 depict two views of the degassing device with integrated sensors, valves and a service pressure gauge.

### Example embodiment

The degassing device designed for heating and/or cooling systems with a heat pump to separate bubbles of leaked flammable gaseous refrigerant from heat transfer liquid consists of an upper module 1 and a lower module 2, watertight connected together.

In the example embodiment in Fig.1 and Fig. 2, modules 1 and 2 have flanges at the joint, and the watertight joint 3 is created by means of gaskets and screws. Both modules 1 and 2 are advantageously made of composite material.

The upper module 1 is equipped with an inlet connection 4 for heat transfer liquid, and a vent valve 7 is arranged at its geometrically highest point.

The upper module 1 and the lower module 2 are connected together to form a collection chamber for heat transfer liquid.

Inside the upper module 1, a fixed separating wall 13 is arranged. The wall 13 is arranged perpendicular to the axis of the inlet connection 4.

The lower module 2 is equipped with an outlet connection 5 for heat transfer liquid and a fixing bracket 6 for securing the degassing device in the heating system.

There is a connection for a pressure sensor 8, a connection for a temperature sensor 9, a connection for a service pressure gauge 12, a connection for a safety pressure valve 10, and a connection for a drain valve 11 arranged advantageously on the lower module 2.

In the case that the degassing device is arranged in the outdoor unit of the heat pump, the connected drain valve 11 is advantageously designed as an anti-freeze valve, with freeze protection.

### Industrial applicability

The described degassing device for separating gas bubbles from liquid, especially from the heat transfer liquid in a heating and/or cooling system with a heat pump, is primarily intended for removing leaked flammable refrigerant.

### List of reference marks

1 upper module
2 lower module
3 watertight joint
4 inlet connection
5 outlet connection
6 fixing bracket
7 vent valve
8 pressure sensor
9 temperature sensor
10 pressure relief valve
11 drain valve
12 service pressure gauge
13 separating wall

## Claims

1. A degassing device designed for heating and/or cooling systems with a heat pump to separate bubbles of flammable gaseous refrigerant from heat transfer liquid,
consisting of an upper module (1) and a lower module (2), connected to each other by a watertight joint (3) to form a collection chamber for heat transfer liquid,
the upper module (1) is equipped with an inlet connection (4) for the heat transfer liquid,
the lower module (2) is equipped with an outlet connection (5) for heat transfer liquid,
inside the upper module (1), there is a fixed separating wall (13) arranged perpendicular to the axis of the inlet connection (4),
and a vent valve (7) is arranged at the highest geometric point of the device,
**characterized in that**
the lower module is equipped with a fixing bracket (6) for securing the degassing device in the heating system, and the lower module (2) is equipped with a connection for a pressure sensor (8), a connection for a temperature sensor (9), a connection for a service pressure gauge (12), a connection for a safety pressure valve (10), and a connection for a drain valve (11).

2. The degassing device according to claim 1,
**characterized in that** the watertight joint (3) is created by means of gaskets and screws, and the upper and lower modules (1, 2) are made of composite material.

3. An outer unit of a heating system with a heat pump,
**characterized in that** it is equipped with the degassing device according to any of the preceding claims.

4. The outer unit of a heating system with a heat pump according to the claim 3,
**characterized in that**
the drain valve (11) connected to the degassing device is designed as an anti-freeze valve.

## Patentansprüche

1. Entgasungsvorrichtung für Heiz- und/oder Kühlsysteme mit einer Wärmepumpe zum Abscheiden von Blasen aus brennbarem gasförmigem Kältemittel aus der Wärmeübertragungsflüssigkeit, bestehend aus einem oberen Modul (1) und einem unteren Modul (2), die durch eine wasserdichte Verbindung (3) miteinander verbunden sind, um eine Sammelkammer für die Wärmeübertragungsflüssigkeit zu bilden,
das obere Modul (1) ist mit einem Einlassanschluss (4) für die Wärmeübertragungsflüssigkeit ausgestattet,
das untere Modul (2) ist mit einem Auslassanschluss (5) für die Wärmeübertragungsflüssigkeit ausgestattet, innerhalb des oberen Moduls (1) befindet sich eine feste Trennwand (13), die senkrecht zur Achse des Einlassanschlusses (4) angeordnet ist,
und an der höchsten geometrischen Stelle der Vorrichtung ist ein Entlüftungsventil (7) angeordnet,
**dadurch gekennzeichnet, dass**
das untere Modul mit einer Befestigungshalterung (6) zur Befestigung der Entgasungsvorrichtung im Heizsystem ausgestattet ist, und das untere Modul (2) mit einem Anschluss für einen Drucksensor (8), einem Anschluss für einen Temperatursensor (9), einem Anschluss für ein Betriebsmanometer (12), einem Anschluss für ein Sicherheitsdruckventil (10) und einem Anschluss für ein Ablassventil (11) ausgestattet ist.

2. Entgasungsvorrichtung nach Anspruch 1,
**dadurch gekennzeichnet, dass** die wasserdichte Verbindung (3) mittels Dichtungen und Schrauben hergestellt wird und das obere und untere Modul (1, 2) aus Verbundmaterial besteht.

3. Außeneinheit eines Heizsystems mit einer Wärmepumpe,
**dadurch gekennzeichnet, dass** sie mit der Entgasungsvorrichtung gemäß einem der vorhergehenden Ansprüche ausgestattet ist.

4. Außeneinheit eines Heizsystems mit einer Wärmepumpe nach Anspruch 3,
**dadurch gekennzeichnet, dass** das mit der Entgasungsvorrichtung verbundene Ablassventil (11) als Frostschutzventil ausgebildet ist.

## Revendications

1. Dispositif de dégazage conçu pour des systèmes de chauffage et/ou de refroidissement avec une pompe à chaleur pour séparer les bulles de réfrigérant gazeux inflammable d'un liquide caloporteur,
consistant en un module supérieur (1) et un module inférieur (2), reliés l'un à l'autre par un joint étanche à l'eau (3) pour former une chambre de collecte du liquide caloporteur,
le module supérieur (1) est équipé d'un raccord d'entrée (4) pour le liquide caloporteur,
le module inférieur (2) est équipé d'un raccord de sortie (5) pour le liquide caloporteur, à l'intérieur du module supérieur (1), se trouve une paroi de séparation fixe (13) disposée perpendiculairement à l'axe du raccord d'entrée (4),
et une soupape d'aération (7) est disposée au point géométrique le plus élevé du dispositif,
**caractérisé en ce que**
le module inférieur est équipé d'un support de fixation (6) pour fixer le dispositif de dégazage dans le système de chauffage, et
le module inférieur (2) est équipé d'un raccord pour un capteur de pression (8), d'un raccord pour un capteur de température (9), d'un raccord pour un manomètre de service (12), d'un raccord pour une soupape de pression de sécurité (10) et d'un raccord pour une soupape de vidange (11).

2. Dispositif de dégazage selon la revendication 1,
**caractérisé en ce que** le joint étanche à l'eau (3) est réalisé au moyen de joints et de vis, et les modules supérieur et inférieur (1, 2) sont réalisés en matériau composite.

3. Unité extérieure d'un système de chauffage avec une pompe à chaleur,
**caractérisée en ce qu'**elle est équipée du dispositif de dégazage selon l'une quelconque des revendications précédentes.

4. Unité extérieure d'un système de chauffage avec une pompe à chaleur selon la revendication 3,
**caractérisée en ce que**
la soupape de vidange (11) reliée au dispositif de dégazage est conçue comme une soupape antigel.
